# EUROPEAN PATENT SPECIFICATION

(11) **EP 3 301 900 B1**
(45) Date of publication and mention of the grant of the patent: **17.02.2021**
(21) Application number: 17188932.2
(22) Date of filing: 01.09.2017
(51) Int. Cl.: H04N 1/46, H04N 1/54, H04N 1/60

(54) **INFORMATION PROCESSING APPARATUS, THREE-DIMENSIONAL FABRICATION APPARATUS, THREE-DIMENSIONAL FABRICATION SYSTEM, SETTING METHOD, AND COMPUTER PROGRAM**
INFORMATIONSVERARBEITUNGSVORRICHTUNG, VORRICHTUNG ZUR DREIDIMENSIONALEN FERTIGUNG, SYSTEM ZUR DREIDIMENSIONALEN FERTIGUNG, EINSTELLVERFAHREN UND COMPUTERPROGRAMM
APPAREIL DE TRAITEMENT D'INFORMATIONS, APPAREIL DE FABRICATION TRIDIMENSIONNELLE, SYSTÈME DE FABRICATION TRIDIMENSIONNELLE, PROCÉDÉ DE RÉGLAGE ET PROGRAMME INFORMATIQUE

(30) Priority: 28.09.2016 JP 2016189352; 26.06.2017 JP 2017124275
(43) Date of publication of application: 04.04.2018
(73) Proprietor: Ricoh Company, Ltd., Tokyo 143-8555 (JP)
(72) Inventor: HAIDA, Kazuo, Ohta-ku, Tokyo 143-8555 (JP)
(74) Representative: Watkin, Timothy Lawrence Harvey

(56) References cited:
- EP-A2- 2 672 692
- JP-A- 2005 229 189
- JP-A- 2016 063 522
- US-A- 4 007 362
- US-A1- 2013 021 627

## Description

### BACKGROUND

### Technical Field

Aspects of the present disclosure relate to an information processing apparatus, a three-dimensional fabrication apparatus, a three-dimensional fabrication system, a setting method, and a computer program.

### Related Art

As a method of manufacturing a three-dimensional object, for example, an inkjet method, a fused deposition molding (FDM) method, a rapid prototyping method, a binder jetting method, a material jetting method, a stereo lithography apparatus (SLA) method, and a selective laser sintering (SLS) method are known. These three-dimensional fabrication methods fabricate the three-dimensional object by using three-dimensional shape information that indicates a three-dimensional shape of the three-dimensional object to be fabricated. As a method to generate the three-dimensional shape information, a method of adding height information to two-dimensional image data of the object to be fabricated is known.

For example, JP-4337571-B1 (JP-2005-229189-A) discloses a method in which a hue range is specified with respect to two-dimensional image data, a region included in the specified hue range is extracted from the two-dimensional image data, and height information is added to the extracted region.

However, a problem may occur with the above-described method of setting height information to the region included in the specified hue range of an image, in that setting height information of the image becomes difficult when processing an image having small color changes such as a pastel painting.
JP 2016 063522 A discloses an image processing apparatus, a method, and a program for generating stereoscopic image data from an original image.

### SUMMARY

The invention proposes an image processing apparatus for generating height information for a received color image, the height information of the received color image being for controlling a three-dimensional fabrication apparatus to fabricate a three-dimensional object as defined by claim 1, a corresponding method according to claim 11 and a program according to claim 12.

In an aspect of this disclosure, a novel information processing apparatus includes a color separator to separate color of a color image, a display controller to display a plurality of images, the colors of which are separated by the color separator on a display, based on image data of the color image, a reception unit to receive height information for each of the plurality of images, and a setting section to set the height information corresponding to the color images based on the setting of the height information received by the reception unit (reception unit).

In still another aspect of this disclosure, a three-dimensional fabrication apparatus includes a color separator to separate color of a color image, a display controller to display a plurality of images, the colors of which are separated by the color separator on a display based on image data of the color image, a reception unit to receive a setting of height information for each of the plurality of images, and a setting section to set the height information corresponding to the color image based on the setting of the height information received by the reception unit.

In still another aspect of this disclosure, a three-dimensional fabrication apparatus for fabricating a three dimensional object, the three-dimensional fabrication apparatus comprising a fabrication unit to fabricate the three dimensional object based on the height information and the image data set by the setting section of the information processing apparatus according to any one of the above-described aspects.

In still another aspect of this disclosure, a three-dimensional fabrication system, includes a color separator to separate color of a color image, a display controller to display a plurality of images, the colors of which are separated by the color separator on a display based on image data of the color image, a reception unit to receive a setting of height information for each of the plurality of images, a setting section to set the height information corresponding to the color image based on the setting of the height information received by the reception unit, and a fabrication device to fabricate a three-dimensional object based on the height information and the image data.

In still another aspect of this disclosure, a three-dimensional fabrication system for fabricating a three-dimensional object, includes a fabrication unit to fabricate the three dimensional object based on the height information and the image data set by the setting section of the information processing apparatus according to any one of above-described aspects.

In still another aspect of this disclosure, a setting method includes separating color of a color image, displaying a plurality of images, the colors of which are separated by the separating, based on image data of the color image, receiving a setting of height information for each of the plurality of images, and setting the height information corresponding to the color image based on the setting of the height information received by the receiving.

In still another aspect of this disclosure, a computer program, causing an information processing apparatus, to perform separating color of a color image, displaying a plurality of images, the colors of which are separated by the separating, based on image data of the color image, receiving a setting of height information for each of the plurality of images, and setting the height information corresponding to the color image based on the setting of the height information received by the receiving.

### BRIEF DESCRIPTION OF THE SEVERAL VIEWS OF THE DRAWINGS

The aforementioned and other aspects, features, and advantages of the present disclosure will be better understood by reference to the following detailed description when considered in connection with the accompanying drawings, wherein:
FIG. 1 is an external perspective view of a three-dimensional fabrication system according to a first embodiment of the present disclosure;
FIG. 2 is a plan view of the three-dimensional fabrication apparatus according to a first embodiment of the present disclosure;
FIG. 3 is a side view of the three-dimensional fabrication apparatus according to a first embodiment of the present disclosure;
FIG. 4 is a front view of the three-dimensional fabrication apparatus according to a first embodiment of the present disclosure;
FIG. 5 is a block diagram illustrating a hardware structure for controlling the three-dimensional fabrication apparatus;
FIG. 6 is a schematic block diagram of a hardware configuration of the computer according to a first embodiment of the present disclosure;
FIG. 7 is a schematic block diagram of an example of a functional configuration of the three-dimensional fabrication system;
FIG. 8 is a flow chart that illustrates an example of a process of generating height information by the computer;
FIG. 9 illustrates an example of a screen for generating the height information;
FIGS. 10A to 10C illustrate a method for setting height information;
FIG. 11 is a flow chart that illustrates an example of a three-dimensional fabrication process;
FIGS. 12A and 12B illustrate an example of color information;
Fig. 13 is a flow chart that illustrates an example of a fabrication process;
FIGS. 14A through 14D are schematic diagrams of an example of a deposition state;
FIG. 15 is a schematic diagram illustrating an example of a mechanical configuration of the head unit.
Fig. 16 is a flow chart of an example of a selection process to select the setting method of the height information;
Fig. 17 is a flow chart of an example of a process of setting the height information; and
FIGS. 18A through 18D are examples of screens for setting the height information.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable. As used herein, the singular forms "a", "an", and "the" are intended to include the plural forms as well, unless the context clearly indicates otherwise.

Referring now to the drawings, wherein like reference numerals designate identical or corresponding parts throughout the several views, embodiments of the present disclosure are described below.

Below, embodiments of the present disclosure are described with reference to the attached drawings.

An information processing apparatus, a three-dimensional fabrication apparatus, a three-dimensional fabrication system, a setting method, and a computer program according to an embodiment of present disclosure are described below with reference to specific embodiments. In the following description, an inkjet recording apparatus that fabricates a three dimensional image on a medium by discharging ultraviolet curable ink (active energy ray curable ink) as the fabrication agent I to the medium from a piezo-type inkjet head is described as an example of a three-dimensional fabrication apparatus. However, the present disclosure is not limited thereto.

### Three-dimensional fabrication system

Referring now to the drawings, a three-dimensional fabrication system according to a first embodiment of the present disclosure is described below.

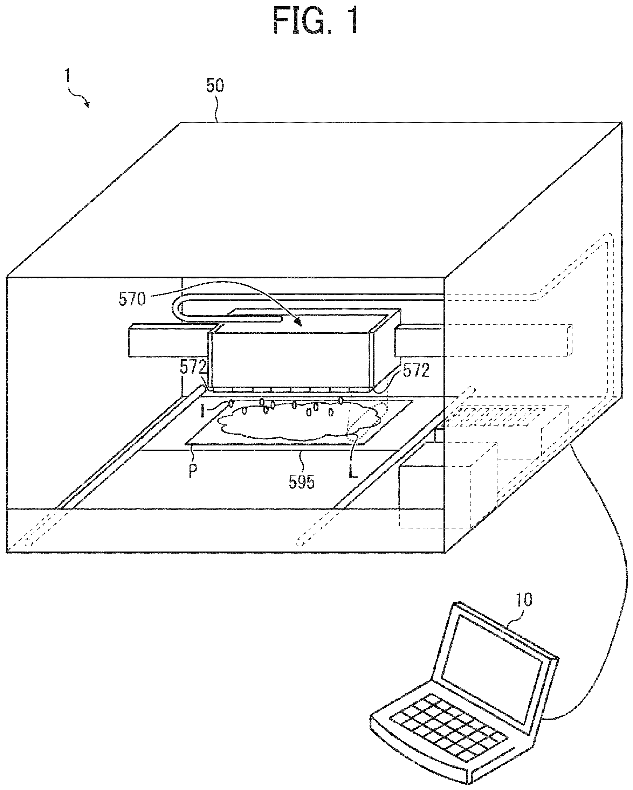

FIG. 1 is an external perspective view of a three-dimensional fabrication system according to a first embodiment of the present disclosure.

The three-dimensional fabrication system 1 includes a three-dimensional fabrication apparatus 50 and a computer 10.

The computer 10 is an information processing apparatus for a generous purpose such as a personal computer or a tablet, or an information processing apparatus exclusive for three-dimensional fabrication apparatus 50. The computer 10 may be incorporated inside the three-dimensional fabrication apparatus 50. The computer 10 may be connected to the three-dimensional fabrication apparatus 50 with a cable. The computer 10 may be a server that communicates to the three-dimensional apparatus via network such as internet or intranet. The computer 10 transmits a data of a fabrication object to be reproduced to the three-dimensional fabrication apparatus 50 via the above-described connection or transmission.

The three-dimensional fabrication apparatus 50 is an inkjet type fabrication apparatus. The three-dimensional fabrication apparatus 50 includes a fabrication unit 570 that discharges the fabrication agent I of liquid to a medium P on a fabrication stage 595 according to data of a fabrication object to be reproduced. Further, the fabrication unit 570 includes a curing device 572 that irradiates light to the fabrication agent I discharged on the medium P to cure the fabrication agent I to form a fabrication layer L. The three-dimensional fabrication apparatus 50 repeats processes of discharging the fabrication agent I on the fabrication layer L and curing the discharged fabrication agent I on the fabrication layer L to obtain the three-dimensional fabrication object.

Material used for the fabrication agent I is agent that is dischargeable by the three-dimensional fabrication apparatus 50, and has a shape stability, and curable by the light irradiated by the curing device 572. For example, the ultraviolet curable ink is used as the fabrication agent I when the curing device 572 is an ultraviolet irradiation apparatus.

Any material on which the discharged fabrication agent I is fixable may be used for the medium P. The medium P is, for example, in the present embodiment, a sheet such as recording sheet, a cloth such as canvas, or plastic sheet.

### Three-dimensional fabrication apparatus

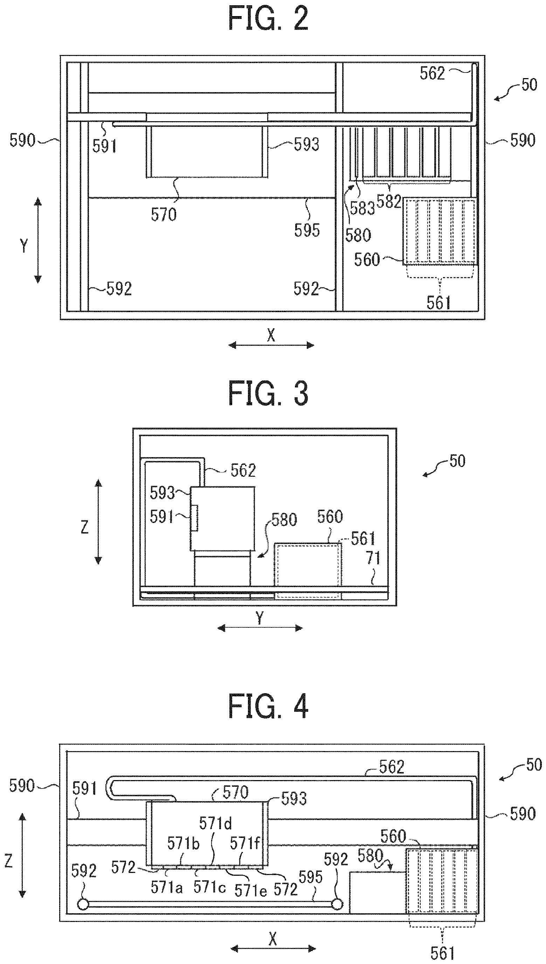

FIG. 2 is a plan view of a three-dimensional fabrication apparatus according to a first embodiment of the present disclosure. FIG. 3 is a side view of a three-dimensional fabrication apparatus according to a first embodiment of the present disclosure. FIG. 4 is a front view of a three-dimensional fabrication apparatus according to a first embodiment of the present disclosure.

To illustrate an interior structure of the three-dimensional fabrication apparatus 50, an upper face of a housing in FIG. 2, a side face of the housing in FIG. 3, and a front face of the housing in FIG. 4 of the three-dimensional fabrication apparatus 50 are omitted.

A guide 591 is held by lateral side plates 590, which are provided on both sides of the three-dimensional fabrication apparatus 50. The carriage 593 is movably held by the guide 591. Via a pulley and a belt, a motor reciprocally moves the carriage 593 along the direction indicated by arrow X as illustrated in FIGS. 2 and 4. Note that, hereinafter, the direction indicated by arrow X is simply referred to as "X-direction", and the same applies to "Y-direction" and "Z-direction". Here, an X-direction is also referred to as "main scanning direction".

The carriage 593 holds the fabrication unit 570 so that the fabrication unit 570 moves in a Z-direction as illustrated in FIGS. 3 and 4 by a motor. The fabrication unit 570 includes six liquid discharge heads 571a, 571b, 571c, 571d, 571e, and 571f that discharge corresponding six types of fabrication agents, respectively. The liquid discharge heads 571a, 571b, 571c, 571d, 571e, and 571f are arranged in an X-direction (main scanning direction) from left to right in this order in FIG. 4. In the following description, a liquid discharge head is simply referred to as "head". Further, an arbitrarily selected one or more of heads 571a, 571b, 571c, 571d, 571e, and 571f are indicated as "head 571". The number of heads 571 is not limited to six, but any number of heads (one or more) may be arranged on the fabrication unit 570 according to the number of the fabrication agents I.

The three-dimensional fabrication apparatus 50 includes a tank mount 560. The tank mount 560 mounts a plurality of tanks 561. The plurality of tanks accommodates a first fabrication agent, a second fabrication agent, a third fabrication agent, a fourth fabrication agent, a fifth fabrication agent, and a sixth fabrication agent, respectively. The six fabrication agents I are supplied to the six heads 571 via the six supply tubes 562, respectively. Each of the heads 571 includes a nozzle array having a plurality of nozzles arranged in array. The heads 571 discharge the corresponding fabrication agents I supplied from the corresponding tanks 561 from the nozzles. In one embodiment, the heads 571a, 571b, 571c, 571d, 571e, and 571f discharges the first fabrication agent, the second fabrication agent, the third fabrication agent, the fourth fabrication agent, the fifth fabrication agent, and the sixth fabrication agent, respectively from the nozzles of respective heads 571.

The fabrication unit 570 includes the curing devices 572 on each sides of the six heads 571 in fabrication unit 570 as illustrated in FIGS. 1 and 4. The curing devices 572 cures and hardens the fabrication agents discharged from the heads 571 onto the medium P. As the curing devices 572, lamps such as an ultraviolet (UV) irradiation lamp and an electron beam irradiation lamp may be used, but any type of curing devices 572 may be used if the device can cure the fabrication agent I. The ultraviolet irradiating lamp includes, for example, a high pressure mercury lamp, an ultra-high pressure mercury lamp, and a metal halide lamp. The ultra-high pressure mercury lamp is a point light source but if the Deep UV type, in which the lamp is combined with an optical system has a high light use efficiency, is used, the lamp is capable of irradiating a short-wavelength modeling portion.

The metal halide lamp is suitable for colored materials because the metal halide lamp has a wide wavelength modeling portion. As the metal halide, halogenized compounds of metal such as Pb, Sn, and Fe are used and can be selected according to the absorption spectrum of a photo-polymerization initiator contained in the fabrication agent I. The curing devices 572 preferably include an ozone removing mechanism to remove the ozone generated by irradiation of such as the ultraviolet ray. The number of curing devices is not limited to two, and any number of the curing devices 572 may be provided depending on the fabrication process, such as whether the fabrication unit 570 reciprocally moves for fabrication. Further, only one of two curing devices 572 need be operated during fabrication process.

Further, a maintenance assembly 580 to maintain the heads 571 in good condition is disposed at one end (right-hand end in FIGS. 2 and 4) in the X-direction of the three-dimensional fabrication apparatus 50. The maintenance assembly 580 includes caps 582 and a wiper 583. The caps 582 are pressed against nozzle faces (nozzle formed faces) of the heads 571, and fabrication agent I is sucked from the nozzles. Thus, thickened fabrication agent I clogging the nozzles is discharged from the nozzle of the heads 571 by vacuuming up the fabrication agent I inside the nozzles with caps 582 of the maintenance assembly 580. Then, the wiper 583 wipes the nozzle faces to form a meniscus in the nozzles (with the interiors of the nozzles being in negative pressure state). The maintenance assembly 580 covers the nozzle faces of the heads 571 with the caps 582 to prevent drying out of the fabrication agent I inside the nozzles when the fabrication agent I is not discharged via the heads 571.

The fabrication stage 595 includes a slider movably held by two guides 592. Via a pulley and a belt, a motor reciprocally moves the fabrication stage 595 along the Y-direction (sub-scanning direction) perpendicular to the X-direction (main scanning direction).

### Fabrication liquid

In the present embodiment, the above-described first fabrication agent is black (K) ultraviolet curable ink as a key plate, the second fabrication agent is cyan (C) ultraviolet curable ink, the third fabrication agent is magenta (M) ultraviolet curable ink, the fourth fabrication agent is yellow (Y) ultraviolet curable ink, the fifth fabrication agent is clear (CL) ultraviolet curable ink, and the sixth fabrication liquid is white (W) ultraviolet curable ink. However, the number of types of fabrication agents is not limited to six, and may be one or more according to the types of colors necessary to reproduce the image. If the number of the fabrication agents is seven or more, an additional head 571 may be provided on the fabrication unit 570 of the three-dimensional fabrication apparatus 50. If the number of the fabrication agents is five or less, any one or more of heads 571 may stop operation, or need not be provided to the fabrication unit 570.

### Controller

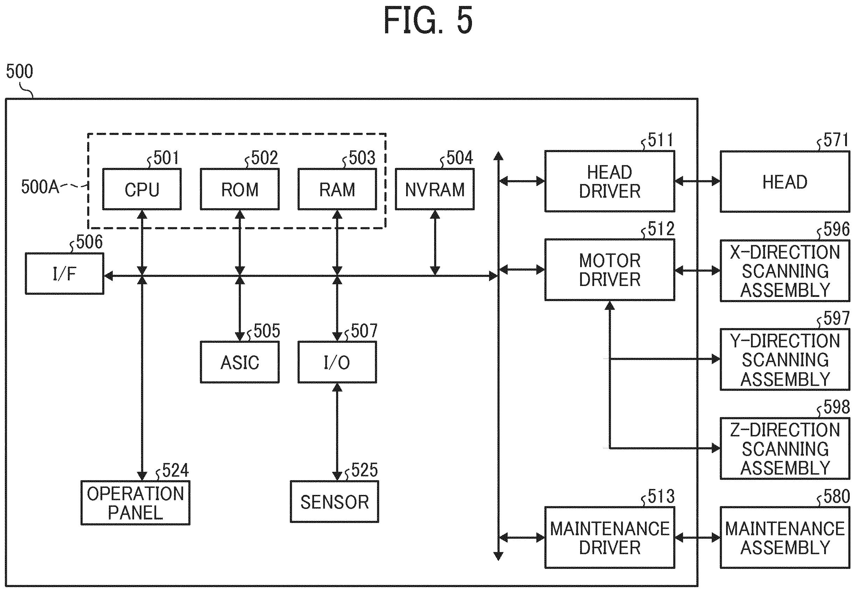

With reference to FIG. 5, a description is provided of a hardware structure of a controller of the three-dimensional fabrication apparatus 50. FIG. 5 is a block diagram illustrating a hardware structure of the three-dimensional fabrication apparatus 50.

The three-dimensional fabrication apparatus 50 includes a controller 500 to control the process and operation of the three-dimensional fabrication apparatus 50. The controller 500 includes a central processing unit (CPU) 501, a read-only memory (ROM) 502, and a random access memory (RAM) 503, a nonvolatile random access memory (NVRAM) 504, an application specific integrated circuit (ASIC) 505, an interface (I/F) 506, and an input-output (I/O) unit 507.

The CPU 501 manages the control of the entire processes and operations of the three-dimensional fabrication apparatus 50. The ROM 502 stores programs (computer programs) executed by the CPU 501 and other fixed data. The programs stored in the ROM 502 include programs for causing the CPU 501 to execute a three-dimensional fabrication operation. The RAM 503 temporarily stores data of a fabrication object to be reproduced and other data. The main controller 500A is constituted by the CPU 501, the ROM 502, and the RAM 503. The main controller 500A executes the processes according to the above-described programs.

The nonvolatile random access memory (NVRAM) 504 stores the data even when power supply to the three-dimensional fabrication apparatus 50 is blocked. The ASIC 505 performs image processing of various types of signals relating to data of a fabrication object, and the ASIC 505 performs processing of input and output signals to control the entire three-dimensional fabrication apparatus 50.

The interface (I/F) 506 is connected to the external computer 10 and sends and receives data and signals transmitted between the computer 10 and the three-dimensional fabrication apparatus 50. The data sent from the computer 10 includes data of the fabrication object to be reproduced. The interface (I/F) 506 may be connected to network such as internet or intranet instead of directly connected to the external computer 10.

The input-output (I/O) unit 507 is connected to several types of sensors 525 to input detection signals from the sensors 525. The controller 500 is connected to an operation panel 524 through which necessary information for the three-dimensional fabrication apparatus 50 is input or displayed.

The controller 500 includes a head driver 511, a motor driver 512, and a maintenance driver 513. The head driver 511 operates according to a command of the CPU 501 or ASIC 505.

The head driver 511 outputs image signals and drive voltage to the heads 571 of the fabrication unit 570 so as to control a discharge operation of the fabrication agent I with the head 571. In this case, the head driver 511 outputs drive voltage to an assembly of the heads 571 such as piezoelectric device that deforms individual chamber in the heads 571 to form a negative pressure or a positive pressure in an individual chamber so that the fabrication agent I in the individual chamber is discharged from the nozzles of the heads 571. The sub tank stores the fabrication agent I to be supplied to the head 571. The head 571 mounts a substrate, and this substrate may generate drive signals by masking the drive voltage with the image signals, for example.

The motor driver 512 outputs the drive signals to a motor and drives the motor that constitutes an X-direction scanning assembly 596. The X-direction scanning assembly 596 moves the carriage 593 of the fabrication unit 570 in the X direction (the main scanning direction). The motor driver 512 outputs the drive signals to a motor and drives the motor that constitutes a Y-direction scanning assembly 597. The Y-direction scanning assembly 597 moves the fabrication stage 595 in the Y-direction (the sub-scanning direction). The motor driver 512 outputs the drive signals to a motor and drives the motor that constitutes the Z-direction scanning assembly 598. The Z-direction scanning assembly 598 moves (elevate) the fabrication unit 570 in the Z-direction.

The maintenance driver 513 outputs the drive signals to the maintenance assembly 580 to drive the maintenance assembly 580.

Each of the above-described parts is electrically connected to all the others with an address bus or a data bus.

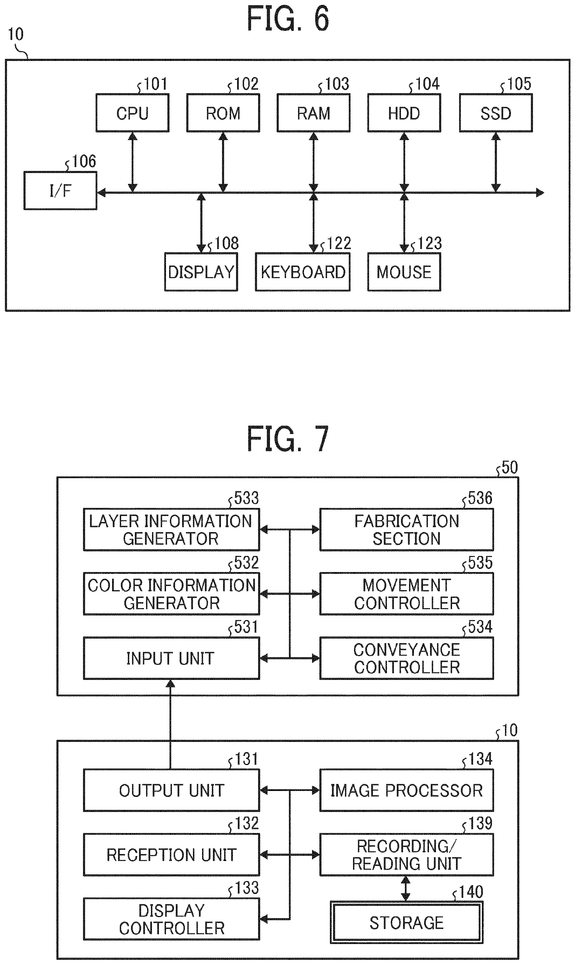

FIG. 6 is a schematic block diagram of a hardware configuration of the computer 10 according to a first embodiment of the present disclosure. The computer 10 includes a central processing unit (CPU) 101, a read-only memory (ROM) 102, and a random access memory (RAM) 103, a hard disk drive (HDD) 104, a solid state drive (SSD) 105, an interface (I/F) 106, a display 108, a key board 122, and a mouse 123. The CPU 101 acts as a controller. The ROM 102 and the RAM 103 act as a main storage device. HDD 104 and SSD 105 act as auxiliary storage device. The interface I/F 106 acts as communication device. The display 108 act as display device. The key board 122 and the mouse 123 act as input device. Each of the above-described parts is electrically connected to all the others with an address bus or a data bus.

### Functional configuration

FIG. 7 is a schematic block diagram of a functional configuration of an example of the three-dimensional fabrication system 1. As illustrated in FIG. 7, the computer 10 includes an output unit 131, a reception unit 132, a display controller 133, an image processor 134, and a recording/reading unit 139. Additionally, the computer 10 includes a storage 140 built by a ROM 102, a RAM 103, a HDD 104, and a SSD 105.

The storage 140 stores image data of an image used for a three-dimensional fabrication. The image data of the image used for the three-dimensional fabrication is, for example, image data to be reproduced as a three-dimensional image such as image data that is obtained by capturing an image of a three-dimensional object as a model of the three-dimensional image. Specifically, if the three-dimensional object to be reproduced by the three-dimensional image is a painting, the image data of the three-dimensional image is an image data obtained by imaging this painting. In the present embodiment, the image data of the three-dimensional image is a RGB image data. Alternatively, the image data may be CMYK image data.

The output unit 131 is realized by the interface I/F 106. The output unit 131 outputs various types of information such as the image data and height information to the three-dimensional fabrication apparatus 50.

The reception unit 132 is realized by a command input from the CPU 101, the key board 122, and the mouse 123. The reception unit 132 receives various types of input from the user.

The display controller 133 is realized by the command input from the CPU 101 and controls the display 108 to display image.

The image processor 134 is realized by the command input from the CPU 101. The image processor 134 performs various types of an image process such as a color separation process of image and a setting process such as setting height information of the image. Thus, the image processor 134 acts as a color separator to separate colors of a color image and a setting section to set height information.

The recording/reading unit 139 is realized by the command input from the CPU 101. The recording/reading unit 139 stores various types of data into the storage 140 and read out the various data stored in the storage 140.

As illustrated in FIG. 7, the three-dimensional fabrication apparatus 50 includes an input unit 531, a color information generator 532, a layer information generator 533, a conveyance controller 534, a movement controller 535, and a fabrication section 536.

The input unit 531 is realized by the interface I/F 506. The input unit 531 inputs various types of information such as image data and height information of the three-dimensional image from the computer 10.

The color information generator 532 is realized by the command input from the CPU 501. The color information generator 532 generates color information that indicates colors of each pixel of the three-dimensional image based on the image data input from the input unit 531.

The layer information generator 533 is realized by the command input from the CPU 501. The layer information generator 533 generates layer information for each layer to fabricate the three-dimensional image based on the height information acquired by the color information generated by the color information generator 532 and the height information input from the input unit 531.

The conveyance controller 534 is realized by the command input from the CPU 501 and the motor driver 512. The conveyance controller 534 controls a conveyance of the medium P

The movement controller 535 is realized by the command input from the CPU 501 and the motor driver 512. The movement controller 535 controls a movement of the fabrication unit 570.

The fabrication section 536 is an example of a fabrication device. The fabrication section 536 is realized by the heads 571 and the head driver 511. The fabrication section 536 performs a fabrication process to fabricate the three-dimensional image by depositing the ultraviolet curable ink on the medium P based on the layer information of each layer generated by the layer information generator 533.

### Process

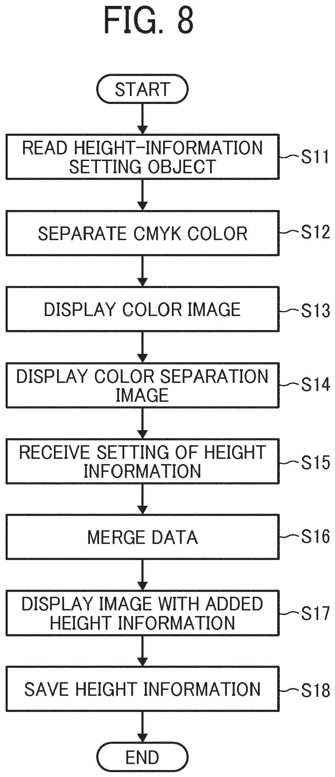

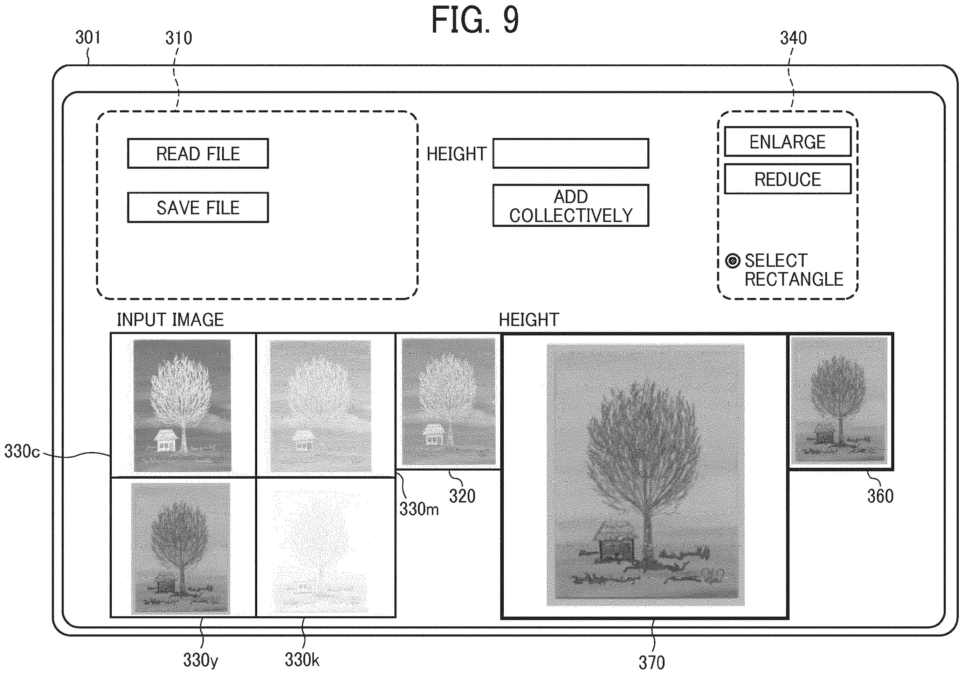

FIG. 8 is a flow chart that illustrates an example of a process of generating the height information by the computer 10. FIG. 9 illustrates an example of a screen for generating the height information. In the following description, referring to FIGS. 8 and 9, the process for generating the height information by the computer 10 is described.

As illustrated in FIG. 9, when the user boots an application that sets a height of an image in the computer 10, the display controller 133 of the computer 10 displays a screen 301 on the display 108. The screen 301 is used for generating the height information that indicates the height of each pixel.

The user uses the mouse 123, etc., to select a button of "READ FILE" arranged in the region 310 of the screen 301. When the user performs an operation of specifying the file of the image data of an object to set the height information (hereinafter, height-information setting object), the reception unit 132 receives the specification of the image data of the height-information setting object. The image data of the height-information setting object is a two-dimensional image data to which the height information has not been set. Alternatively, the image data of the height-information setting object may be three-dimensional image data during editing to which the height information has been partially set. The recording/reading unit 139 reads out the specified image data from the storage 140 (Step S11 in FIG. 8). Thus, the recording/reading unit 139 read out the specified image data of height-information setting object from the storage 140.

The image data read out as the height-information setting object includes color information of R (red), G (Green), and B (blue) and gradation of each colors for each pixel. The image processor 134 generates image data of four images that is obtained by performing a color separation on the image of the read out image data to C (Cyan), M (Magenta), Y (Yellow), and K (Key plate) as a process color (step S12 in FIG. 8). Thus, the image processor 134 generates image data of color separation image obtained by the color separation. The method of color separation from the RGB image to the CMYK image is not specifically limited. There is a method in which the image processor 134 transforms the read out RGB image to the CMYK image and extracts the gradation of each C, M, Y, and K from the transformed CMYK image to generate the four image data.

The present disclosure is not limited to separating the colors of the read out image from the RGB image to the CMYK image. For example, the image processor 134 may generate image data of three images by performing color separation on the image of the read out image data to R (Red), G (Green), and B (Blue) as a process color. The image data of each image that is color separated is stored in the storage 140 by the recording/reading unit 139.

The display controller 133 displays the image of the image data read out by the step S11 on the region 320 of the screen 301 (Step S13 in FIG. 8). Thereby, the color image is displayed on the screen 301, and this color image reproduces the color information and the gradation included in the image data.

Further, the display controller 133 transforms the image having colors of C, M, Y, and K, the colors of which are separated in step S12 (color separation image), to gray scale and displays the transformed image on the region 330c, 330m, 330y, and 330k of the screen 301 (step S14 in FIG. 8). In this process, the display controller 133 transforms the color information of the image data from C, M, Y, and K to a color such as black without changing the gradation. The image data of the images to be transformed to black is obtained by performing color separation on the original image to the colors of C, M, Y, and K. The display controller 133 outputs the transformed image data to the display 108. The display controller 133 may display on the display 108 the image data of color separated images with the separated colors of C, M, Y, and K without transforming the colors of image data to gray scale (black).

The reception unit 132 receives a setting of height information of each image of the region 330c, 330m, 330y, and 330k from the user (step S15 in FIG. 8). In the following description, first to third methods to set the height information are described. However, the method of setting the height information is not limited to the following. Further, the following three methods may be used alone or used in combination.

In the first method, the reception unit 132 receives a specification of apexes in height for each image of the regions 330c, 330m, 330y, and 330k displayed on the display 108 and receives the specification of the height of each apexes. For example, when the user uses the mouse 123, for example, to perform the operation of specifying the arbitrary point as an apex in the image that is color separated in color C displayed in the region 330c of the screen 301, the reception unit 132 receives the specification of the apex in the image that is color separated in color C. Further, the user uses the key board 122, for example, to perform the operation to specify the height of the specified apex, then the reception unit 132 receives the specification of the height of this apex.

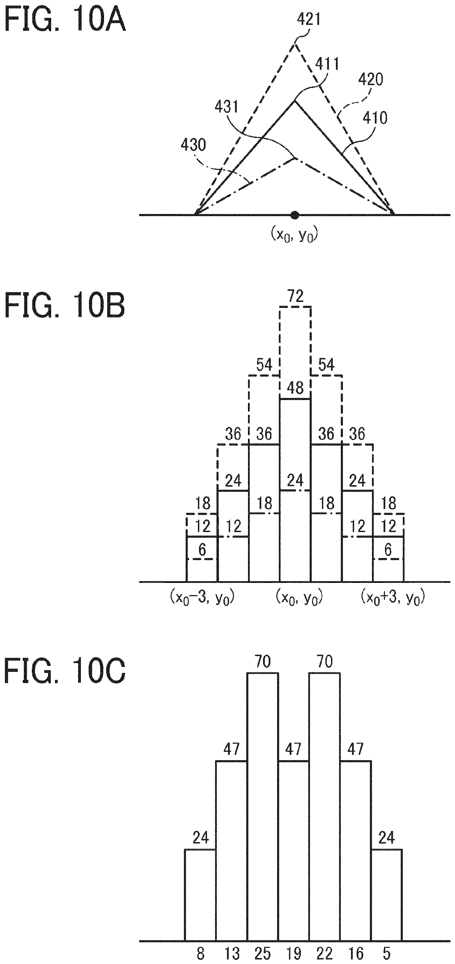

The image processor 134 determines and adds the height information on the pixels of the predetermined region including the specified apex when the apex is specified on the image data of the color separated image. Here, in the first method, a first height determination logic is used that determines the height around the apex according to a ratio between the height and the distance (distance in plane surface) to the apex. FIGS. 10A to 10C illustrate methods for setting height information. For example, as indicated in the solid line in FIGS. 10A and 10B, it is assumed that a pixel (xo, yo) is specified as an apex 411, and "48" is specified as the height of the apex 411. In this case, as illustrated in the solid line in FIG. 10B, the image processor 134 sets the height of the pixel (xo, yo) to "48" and sets the height of the pixels around the apex 411 to form a cone 410 having a previously determined radius of "4". Here, the figures illustrated in FIG. 10B indicate the height of each pixel.

For example, as indicated in a broken line in FIGS. 10A and 10B, it is assumed that a pixel (xo, yo) is specified as an apex 421, and "72" is specified as the height of the apex 421. In this case, as illustrated in the broken line in FIG. 10B, the image processor 134 sets the height of the pixel (xo, yo) to "72" and sets the height of the pixels around the apex 421 to form a cone 420 having a previously determined radius of "4". Here, the figures illustrated in FIG. 10B indicate the height of each pixel.

Further, for example, as indicated in a dashed line in FIGS. 10A and 10B, it is assumed that a pixel (xo, yo) is specified as an apex 431, and "24" is specified as the height of the apex 421. In this case, as illustrated in the broken line in FIG. 10B, the image processor 134 sets the height of the pixel (xo, yo) to "24" and sets the height of the pixels around the apex 431 to form a cone 430 having a previously determined radius of "4". Here, the figures illustrated in FIG. 10B indicate the height of each pixel.

The above description explains the example of setting a height linearly from the specified apex. However, the height may be set nonlinearly such as a cone or a truncated cone.

In a second method, as a second height determination logic, the reception unit 132 receives an operation for setting a value corresponding to gradation as the height information on the region selected by the mouse 123, etc. The reception unit 132 sets the height of each pixel in the selected region on the color separated image such that the height becomes higher with the increase in the gradation as illustrated in Table 1 or the height becomes higher with the decrease in the gradation as illustrated in Table 2. The image processor 134 stores and manages tables in which the gradation and the height are in association with each other as illustrated in Tables 1 or 2 in the storage 140.

The image processor 134 sets the height that corresponds to the gradation of each pixel in the selected region using one of the tables of Tables 1 and 2. When the reception unit 132 receives the information that sets a higher height with the increase in the gradation, the image processor 134 sets the height as illustrated in FIG. 10C according to the gradation of each pixel using the Table 1. Here, the figures illustrated in the upper part of FIG. 10C indicate the height of each pixel, and the figures illustrated in the lower part of FIG. 10C indicate gradation.

**[Table 1]**

| | | | | | | | |
|---|---|---|---|---|---|---|---|
| GRADATION VALUE | 0 | 1-9 | 10-19 | 20-29 | 30-39 | 40-49 | ... |
| HEIGHT | 0 | 24 | 47 | 70 | 94 | 117 | ... |

**[Table 2]**

| | | | | | | | |
|---|---|---|---|---|---|---|---|
| GRADATION VALUE | 255 | 245-254 | 235-244 | 225-234 | 215-224 | 205-214 | ... |
| HEIGHT | 0 | 24 | 47 | 70 | 94 | 117 | ... |

In a third method, as a third height determination logic, the reception unit 132 receives a specification of a height of the region selected by the mouse 123, etc. The user uses the mouse 123, etc., to perform an operation of specifying the height while selecting a region in the color separated images. Then, if the user selects a button of "ADD COLLECTIVELY" arranged in an upper central part of the screen 301 in FIG. 9, the image processor 134 sets the height information that indicates a height specified on entire pixels in the selected regions. The image processor 134 may set the height information that indicates the specified height to the pixels having a gradation greater than a predetermined value in the selected region. In this method, the height of the selected region forms a cylinder.

When the height information is set to the image that is color separated to one of the color of C, M, Y, and K, the recording/reading unit 139 stores the data of the height information in the storage 140. The pixels of the image and the height information are associated with each other in the data. Further, the image processor 134 merges the data of the height information of each image, the colors of which are separated to colors of C, M, Y, and K. For example, when the height information of "48, 0, 32, 0" is respectively set to one pixel in the data of the height information of the image, the colors of which are separated to colors of C, M, Y, and K, the image processor 134 merges these height information and obtains the height information of "80" for this pixel (step S16 in FIG. 8). The image processor 134 repeats the process of merging for all the pixels to which the height information has been set. The data of the height information obtained by merging is stored in the storage 140 by the recording/reading unit 139.

The display controller 133 displays the image on the region 360 of the screen 301, this displayed image is obtained by adding the height of height information that is merged in the step S16 to the color image of the image data read out by the step S11 (step S17 in FIG. 8). Thus, the display controller 133 displays the image with added height information on the screen 301. The display controller 133 may display the image provided with the height information on a two-dimensional display by increasing the gradation of the pixel with the increase in the set height information of the pixel, for example. Further, the display controller 133 may display the image provided with the height information on a three-dimensional display by changing an angle between a line of sight and a surface of the image (surface of screen 301) from orthogonal direction to slanted direction.

The computer 10 repeats the processes of steps S16 and S17 whenever the height information is set to the color separated image in step S15. The timing when the image processor 134 performs the process of step S16 that merges the height information is not necessary at the timing of setting the height information to each of color separated images. For example, the timing may be at the timing when the height information has been set to entire color separated images.

When the user completes the setting of the height information for each color separated images and selects a button of "SAVE FILE" arranged in region 310 of the screen 301 in FIG. 9, the recording/reading unit 139 stores the data of the height information finally merged in step S16 as a file in the storage 140 (step S18).

As described above, the three-dimensional fabrication system 1 according to the present disclosure receives the setting of height information for the image obtained by separating the color image to each of the process colors. Thereby, according to the present embodiment, the user can edit and set the height information for the color separated images while confirming a characteristic and images of original color image by looking at the region 370 in the screen 301 as illustrated in FIG. 9. Thus, the user can easily set the height information on the color image.

Further, the user repeats the setting of the height information for the color separated images while looking at a sample of the three-dimensional object of the region 360 or sets the height information by using the appropriate setting methods of the height information according to the purposes. In this way, the present embodiment makes easier for the user to reproduce the three-dimensional object that has a shape, asperity, and colors that matches a desired image of the user.

The display controller 133 may display an image by enlarging or reducing the images in each regions 320, 330c, 330m, 330y, 330k, 360, and 370 according to an operation of the user on the region 340 in the screen 301. Thereby, the user can optimize a partial shape of the image by repeating the setting of the height information for each enlarged or reduced regions or setting the height information with the appropriate setting methods of the height information. Thus, it is possible to generate height information that illustrates a finer shape.

The present embodiment can solve the following problems occurred during a general three-dimensional fabrication by setting the height information for the images obtained by separating colors of a color image.
1) It is difficult for a conventional setting method to reproduce asperity of the image having a similar colors or low contrast.
2) For the image such as an illustration or a printing that is randomly constituted by complex colors, the reproduced shape data has too much asperity and has too much complicated shape when shape data is generated only from information such as color information, brightness, and saturation. Thus, a consistency and reproductively between the shape of the reproduced object and the shape of the original three-dimensional object may be decreased.
3) When three-dimensional data is generated from the two-dimensional data because of absence of original three-dimensional object, there may occurred a discrepancy between the feel of asperity of an image that can be imagined from the two-dimensional image data and the feel of asperity of the reproduced three-dimensional object.
4) The discrepancy of the feel of asperity influences shadow formed by the asperity that is revealed when color is added to the fabrication object. Thus, appearance of the color reproducibility may be decreased.

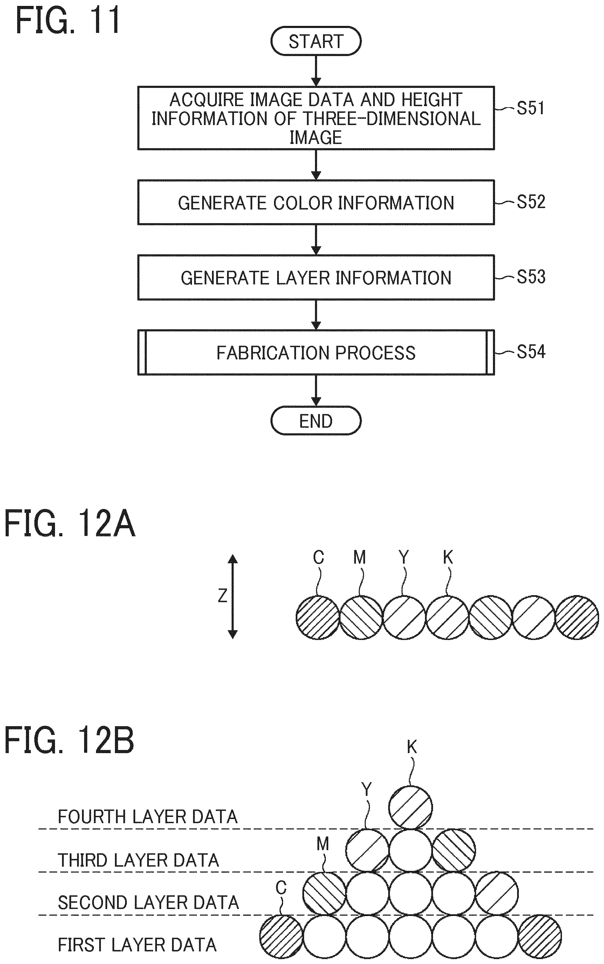

FIG. 11 is a flow chart that illustrates an example of three-dimensional fabrication process. When the user performs an input operation on the three-dimensional fabrication apparatus 50 to start three-dimensional fabrication, the three-dimensional fabrication apparatus 50 queries the computer 10 to acquire image data and height information via the interface I/F 506. In response to this demand, the output unit 131 of the computer 10 outputs to the three-dimensional fabrication apparatus 50 an image data of the color image stored in the storage 140 and the data of the height information set for this color image. The input unit 531 of the three-dimensional fabrication apparatus 50 inputs and acquires image data and the data of height information from the computer 10 (step S51 in FIG. 11).

Next, the color information generator 532 generates color information based on the image data input from the input unit 531 (step S52 in FIG. 11). The color information indicates colors of each pixel of the three-dimensional image. For example, the color information generator 532 generates the color information by converting the color of RGB image data input from the input unit 531 to the CMYK image data. Here, any given technology may be used to converse the color (color space conversion) from RGB to CMYK. Here, the generated color information is used for fabrication of the three-dimensional image. Thus, a special process for the fabrication of the three-dimensional image may be added.

FIGS. 12A and 12B are schematic cross-sectional views of the color information illustrated by pixels. In the present embodiment, it is assumed that the color information has one layer of information as illustrated in FIG. 12A. That is, the present embodiment assumes that the color information is a two-dimensional information having dimensions in the X-direction and Y-direction, because the reproducibility of colors decreases when the color is superimposed during depositing layers of colors.

Thus, when a plurality of layers of the color information is generated, basically, the color information of a first layer is used, and the color information of a second layer and the layers above the second layer are not used. Thereby, when the three-dimensional image is fabricated, an ultraviolet curable ink of one color formed as a pixel indicating the color information is not superimposed and deposited on another ultraviolet curable ink of another color formed as a pixel indicating another color information. Thus, the color reproducibility of the three-dimensional image is improved.

Here, in the example as illustrated in FIG. 12A, the reference characters Y, M, C, and K represent yellow, magenta, cyan, and black, respectively. In FIG. 12A, pixels having the same pattern have the same color.

Next, the layer information generator 533 generates layer information for each layer for fabrication of the three-dimensional image according to the color information generated by the color information generator 532 and the height information input from the input unit 531 (step S53 in FIG. 11).

As illustrated in FIG. 12B, the layer information generator 533 generates three-dimensional image information by arranging the pixels (circle with pattern in FIG. 12B) indicated by the color information generated by the color information generator 532 on the pixels (white circle in FIG. 12B) used for generating a solid (three-dimensional) shape indicated by the height information. The three-dimensional image information becomes the bases of the layer information. Hereinafter, the pixels used for generating the solid shape are simply referred to as "pixels for shape". Then, the layer information generator 533 generates the layer information indicating an arrangement of the pixels in each layer by separating the three-dimensional information to each layer. Here, in FIG. 12B, the white circles without pattern are the pixels for shape generated according to the height information.

In FIG. 12B, the pixels for shape correspond to the height information of "0, 1, 2, 3, 2, 1, 0" from left to right. Further, the pixels for color indicated by the color information in FIG. 12A is disposed (deposited) on the corresponding pixels for shape as illustrated in FIG. 12B. Then, the layer information generator 533 separates the generated layer information into shape-layer information and color-layer information. The shape-layer information indicates an arrangement of the pixels for generating the solid shape. The color-layer information indicates an arrangement of the pixels for coloring the reproduced three-dimensional object. In the example illustrated in FIG. 12B, the uppermost fourth layer of the layer information is sorely constituted by the color-layer information.

The fabrication section 536 performs a fabrication process to fabricate the three-dimensional image by depositing the ultraviolet curable ink on the medium P based on the layer information of each layer generated by the layer information generator 533 (step S54 in FIG. 11). In the present embodiment, the fabrication section 536 uses a white (W) ultraviolet curable ink for fabricating the pixels for shape of the three-dimensional image. The white (W) ultraviolet curable ink has different color with other ultraviolet curable ink (C, M, Y, and K) used for fabricating the pixels for color. The ultraviolet curable ink used for fabricating the pixels for shape is not limited to the white (W) ultraviolet curable ink. For example, the ultraviolet curable ink of a clear (CL) ultraviolet curable ink may be used. Further, mixture of white (W) and clear (CL) ultraviolet curable ink may be used.

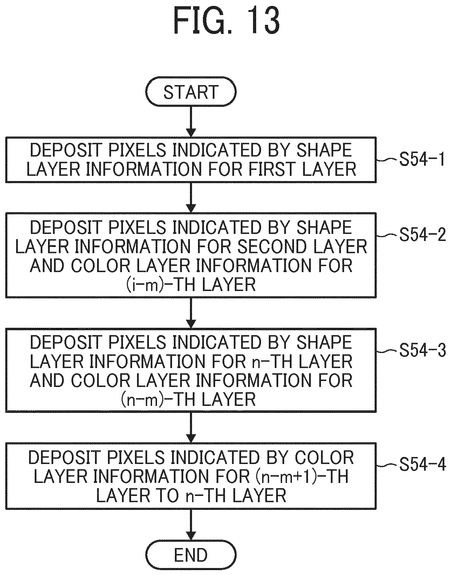

Fig. 13 is a flow chart that illustrates an example of a fabrication process of the step S54. In the present embodiment, the fabrication section 536 deposits the ultraviolet curable ink for colors based on the color layer information, while delaying the deposition of the ultraviolet curable ink for colors by m layers (m is a natural number equal to or larger than one) than the deposition of the ultraviolet curable ink for shape based on the shape layer information for the same layer.

With a reduction of the delay in the deposition of the ultraviolet curable ink for colors based on the color information than the deposition of the ultraviolet curable ink for shape based on the shape layer information for the same layer, a discharge distance of the ultraviolet curable ink from the nozzle face of the head 571 to the medium P or the deposited ink on the medium P can be reduced. Thereby, the fabrication accuracy of the three-dimensional image can be improved.

On the other hand, with an increase of the delay in the deposition of the ultraviolet curable ink for colors based on the color information than the deposition of the ultraviolet curable ink for shape based on the shape layer information for the same layer, a number of irradiation of the ultraviolet curing light to the ultraviolet curable ink for forming the colors of yellow (Y), cyan (C), and magenta (M) can be reduced. Thereby, the degradation of the ultraviolet curable ink for colors can be prevented. Further, a color reproduction of the three-dimensional image can be improved.

Here, a deposition method when m = 1 is described using the layer information illustrated in FIG. 12B as an example.

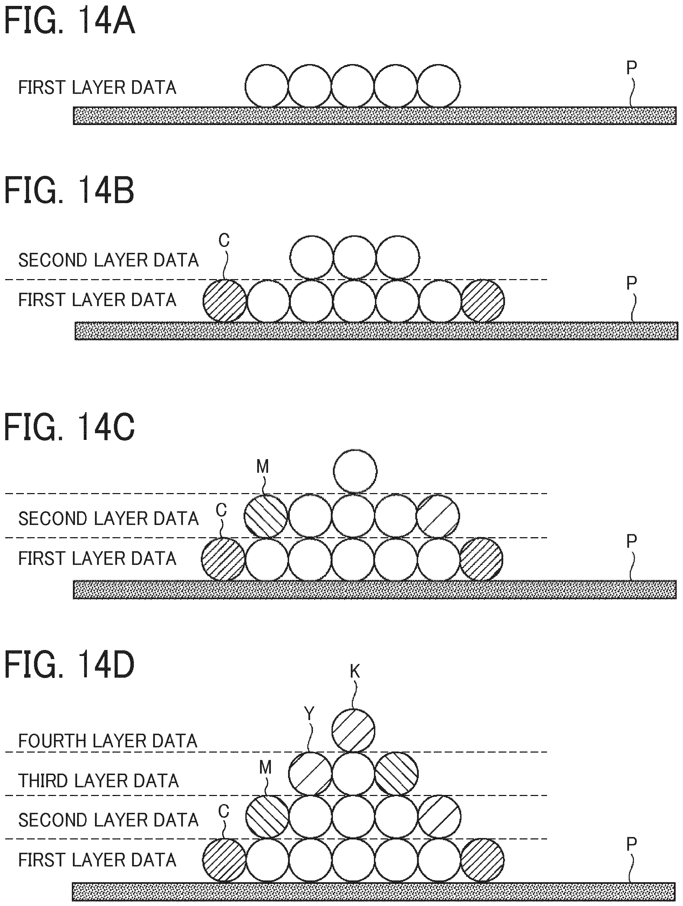

First, the fabrication section 536 uses the white (W) ultraviolet curable ink for depositing the pixels for shape indicated by the shape layer information for a first layer on the medium P (step S54-1) as illustrated in FIGS. 13 and 14A.

FIG. 14A is a schematic diagram of an example of the deposition state in step S54-1 in FIG. 13.

Then, the fabrication section 536 uses the white (W) ultraviolet curable ink for depositing the pixels for shape indicated by the shape layer information for a second layer on the pixels for shape indicated by the shape layer information for the first layer (step S54-2) as illustrated in FIGS. 13 and 14B. At the same time, the fabrication section 536 uses the color ultraviolet curable ink for depositing the pixels for color indicated by the color layer information for a (2-m)-th layer on the medium P (step S54-2) as illustrated in FIG. 14B. FIG. 14B is a schematic diagram of an example of the deposition state in step S52-2 in FIG. 13.

Then, the fabrication section 536 uses the white (W) ultraviolet curable ink for depositing the pixels for shape indicated by the shape layer information for an i-th layer on the pixels for shape indicated by the shape layer information for the (i-1)-th layer (step S54-2) until i becomes equal to n-1 (i = n-1) illustrated in FIGS. 13 and 14B. At the same time, the fabrication section 536 uses the color ultraviolet curable ink for depositing the pixels for color indicated by the color layer information for an (i-m)-th layer on the medium P or the pixels for shape indicated by the shape layer information for an (i-m-1)-th layer (step S54-2) as illustrated in FIGS. 13 and 14B. Here, "i" starts form three, and the value of "i" is incremented every time the deposition process has been performed. In the present embodiment, when (i-m) is equal to or below zero, the deposition process of the pixels for color using the color ultraviolet curable ink indicated by the color layer information is not performed.

Next, the fabrication section 536 uses the white (W) ultraviolet curable ink for depositing the pixels for shape indicated by the shape layer information for an n-th layer on the pixels for shape indicated by the shape layer information for the (n-1)-th layer (step S54-3) as illustrated in FIGS. 13 and 14C. At the same time, the fabrication section 536 uses the color ultraviolet curable ink for depositing the pixels for color indicated by the color layer information for an (n-m)-th layer on the pixels for shape indicated by the shape layer information for the (n-m-1)-th layer (step S54-3) as illustrated in FIGS. 13 and 14C. Here, "n" is the uppermost layer. FIG. 14C is a schematic diagram of an example of the deposition state in step S54-3.

Finally, the fabrication section 536 uses the color ultraviolet curable ink for depositing the pixels for color indicated by the color layer information from (n-m+1)-th layer to n-th layer on the pixels for shape indicated by the shape layer information from (n-m)-th layer to (n-1)-th layer (step S54-4) as illustrated in FIGS. 13 and 14D. FIG. 14D is a schematic diagram of an example of the deposition state in step S54-4.

### Variation 1

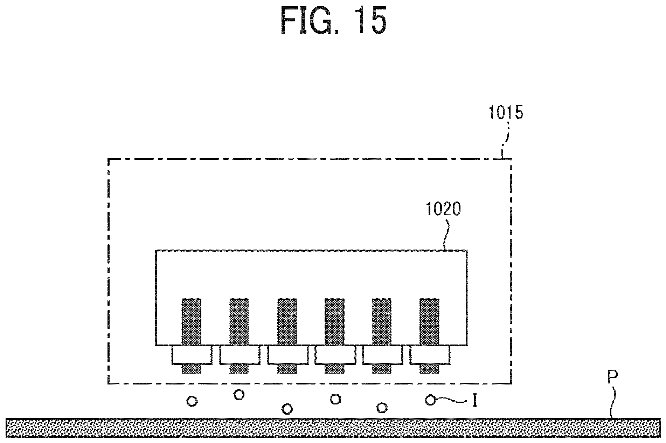

In Variation 1, a mechanical configuration of the head unit 1015 is described when a fused deposition modeling (FDM) is performed. FIG. 15 is a schematic diagram illustrating a mechanical configuration of the head unit 1015 according to the variation 1. As illustrated in FIG. 15, the head unit 1015 includes a fusing head (thermal head) 1020.

The fusing head 1020 heats a meltable ink as a fabrication liquid I and discharges the meltable ink to the medium P. Similar to the inkjet-type fabrication system, the meltable ink is constituted by meltable ink of, e.g., colors of white (W), clear (CL), yellow (Y), cyan (C), magenta (M), and black (Bk). The meltable ink discharged onto the medium P is hardened by cooling the meltable ink. A deposition of the hardened meltable ink fabricates the three-dimensional object. Further, the dimensional object may be fabricated using thermosetting resin that can be hardened by application of heat or an electron beam curable resin curable by irradiation of an electron beam instead of above-described meltable ink.

### Variation 2

In the above-described embodiment, the fabrication section 536 uses ultraviolet curable ink without color such as white (W) or clear (CL) for fabricating the pixels for shape on the three-dimensional fabrication. However, the color ultraviolet curable ink may be used for fabricating the pixels for shape, and thus can improve the reproducibility of the three-dimensional image and also improve the fabrication speed of the three-dimensional image.

### Variation 3

In the above-described embodiment, an example of covering all the surface of the three-dimensional image with the pixels for color indicated by the color information. However, a part of the surface to be colored in the three-dimensional image may be covered with the pixels for color indicated by the color information if only a part of the surface of the three-dimensional image is to be colored.

### Variation 4

In the above-described embodiment, the layer information is generated by the three-dimensional fabrication apparatus 50. However, the computer 10 may perform the processes up to the generation of the layer information (processes from step S51 to S53 in FIG. 11). In this case, the computer 10 includes the color information generator 532 and the layer information generator 533, and the input unit 531 acquires the layer information from the computer 10.

In the above-described embodiment, the height information is generated by the computer 10. However, the three-dimensional fabrication apparatus 50 may generate the height information. In this case, a part of functions of the image processor 134 of the computer 10 may be included in the three-dimensional fabrication apparatus 50. Further, when the three-dimensional fabrication apparatus 50 generates the height information, only the user interface (input operation and screen display only) is realized by the computer 10, and other operations may be performed by the three-dimensional fabrication apparatus 50.

### Variation 5

In the processes from the step S11 to the step S18 as described in FIG. 8, the height information is set based on a plurality of images separated into the colors of C, M, Y, and K. This method is effective to enable the user to easily specify the region for setting the height when the two-dimensional image has less color change such as a painting having pastel shade and unclear outline.

On the other hand, when the height is set for the two-dimensional image, such as a photograph having a clear outline of a subject or an illustration having a clear shape, the height may easily be set from the image itself without performing the color separation on the image. In this case, setting the height information according to the color separated images may cost more labor than simply setting the height from the image itself.

In Variation 5, the computer 10 selects whether to set the height from the plurality of the color separated images (first height information setting process) or to set the height from the two-dimensional image on which the color separation is not performed (second height information setting process) according to the characteristics of the image.

The process of Variation 5 is described below with reference to the difference with above-described embodiments.

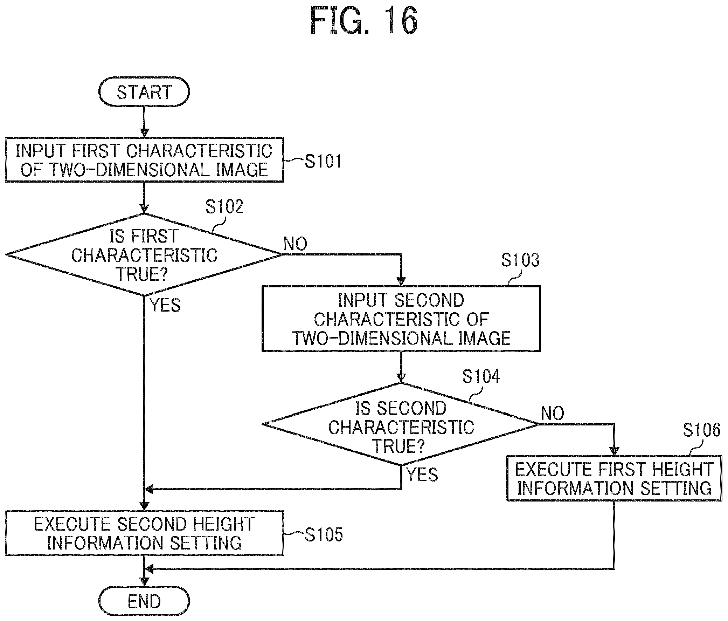

Fig. 16 is a flow chart of an example of a selection process to select the setting method of the height information. The user uses the mouse 123, etc., of the computer 10 to specify a file of the image data of the height-information setting object (object to set the height information). Then, the reception unit 132 receives the specification of the image data of the height-information setting object.

When the specification of the image data is received, the display controller 133 display a dialog on the display 108 to confirm whether the specified image data is an illustration having a clear shape as the first characteristic of the two-dimensional image. The reception unit 132 receives an input from the user a first characteristic (step S101). Here, when the user inputs that the image data is the illustration having a clear shape, the reception unit 132 receives an input of "TRUE" as the first characteristic. When the user inputs that the image data is not the illustration having a clear shape, the reception unit 132 receives an input of "FALSE" as the first characteristic.

The image processor 134 determines whether the first characteristic is "TRUE" or not based on the input in the step S101 (step S102). When the first characteristic is determined as "TRUE" (YES) in the step S102, the image processor 134 determines to execute the setting of the height information from the two-dimensional image, on which the color separation is not performed, according to the second height information setting process (step S105).

When the image processor 134 determines that the first characteristic is not "TRUE" (NO) in step S102, the display controller 133 display on the display 108 the dialog for confirming whether the outline of the subject of the specified image data is clear as the second characteristic of the two-dimensional image.

The reception unit 132 receives an input of a second characteristic from the user (step S103). Here, when the user inputs to the reception unit 132 that the outline of the subject is clear, the reception unit 132 receives the input of "TRUE" as the second characteristic. When the user inputs that the outline of the subject is unclear, the reception unit 132 receives the input of "FALSE" as the second characteristic.

The image processor 134 determines whether the second characteristic is "TRUE" based on the input in the step S103 (step S104). When the second characteristic is determined as "TRUE" (YES) in the step S104, the image processor 134 determines to execute the second height information setting process that is the process of setting the height information from the two-dimensional image, on which the color separation is not performed (step S105).

When the second characteristic is determined as "NOT TRUE" (NO) in the step S104, the image processor 134 determines to execute the first height information setting process that is the process of setting the height information from the two-dimensional image, on which the color separation is performed (step S106).

When it is determined to execute the first height information setting process in step S106, the processes from the step S11 to step S18 in FIG. 8 in the above-described embodiment are executed after the step S106.

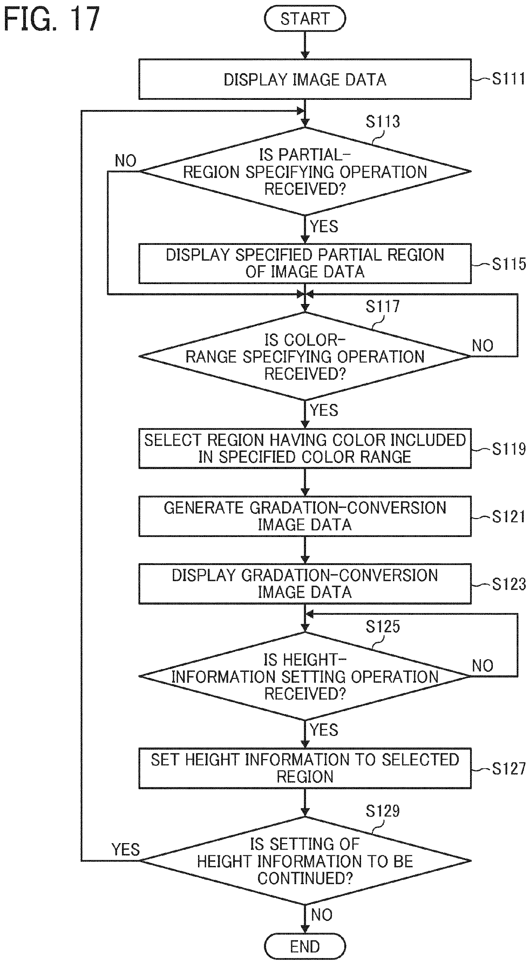

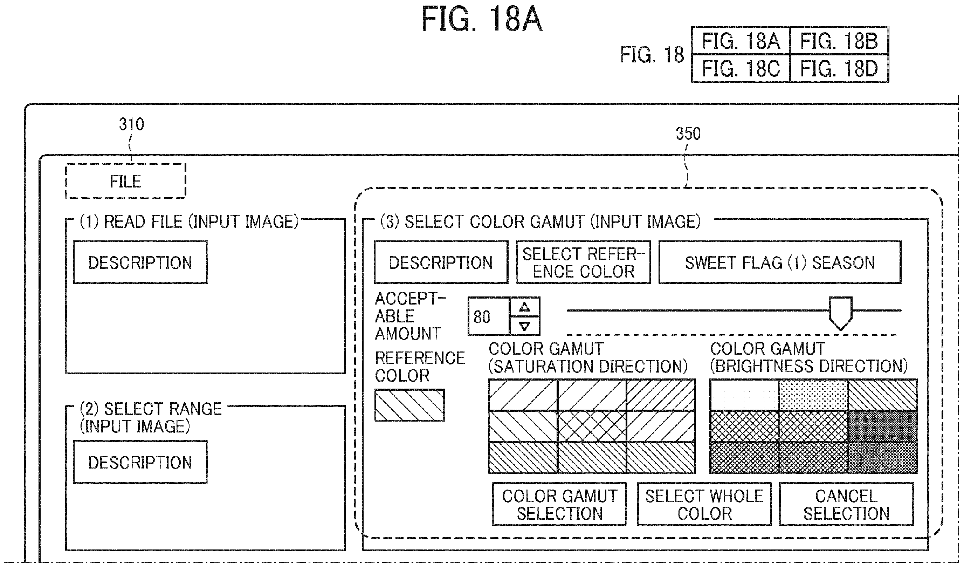

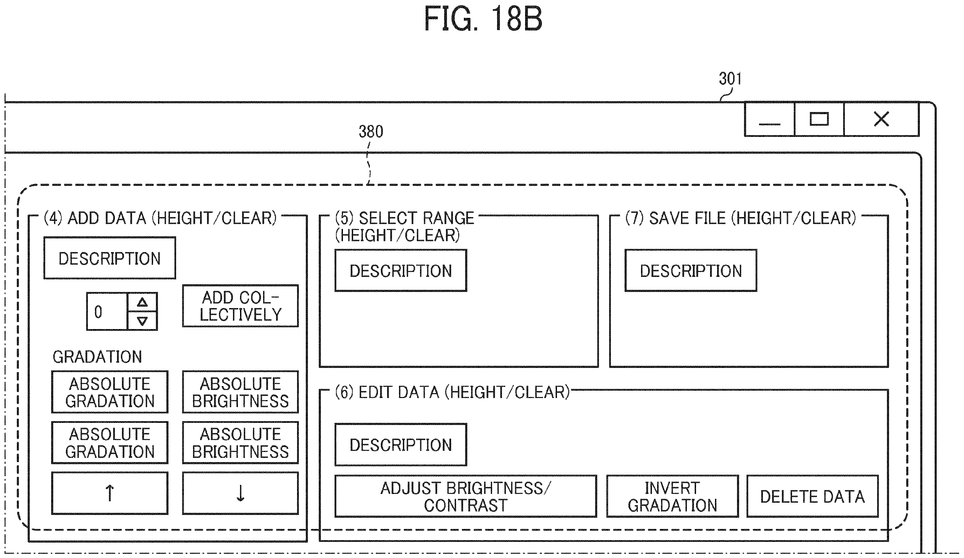

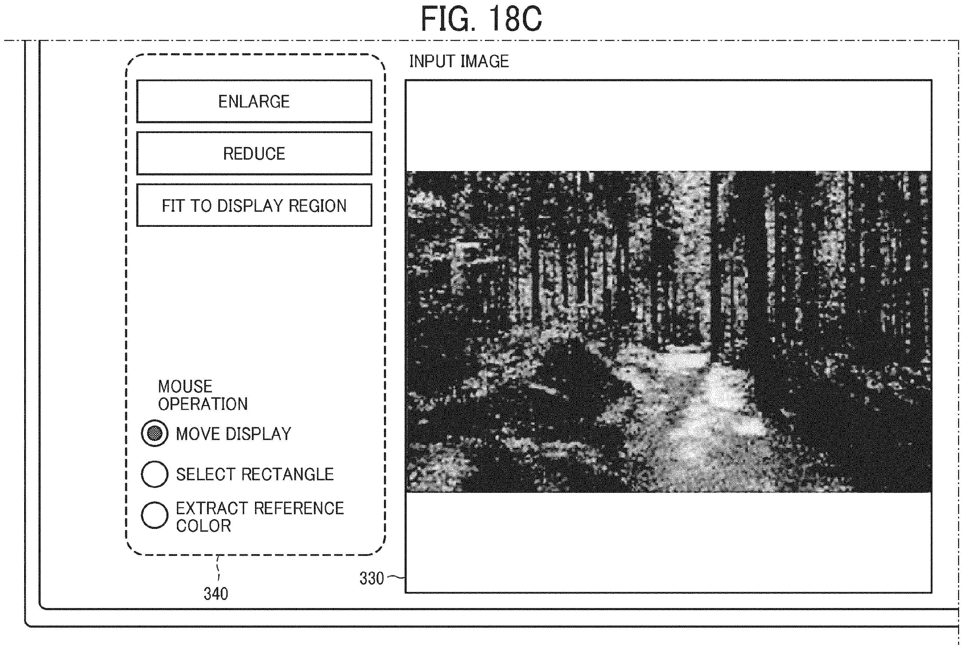

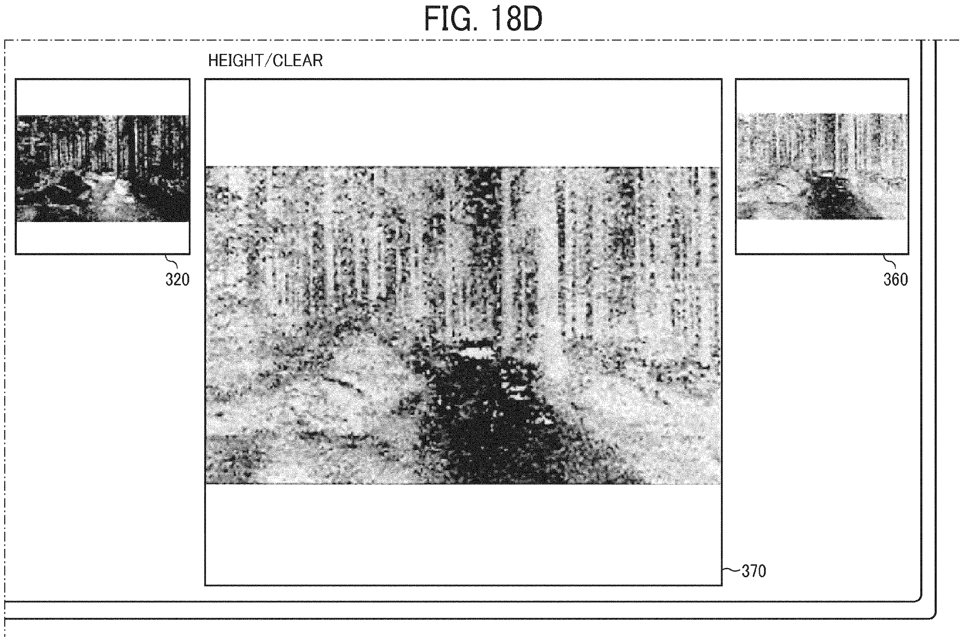

In the following description, the process when it is determined to execute the second height information setting process in step S105 is described. FIG. 17 is a flow chart of an example of the second height information setting process. FIGS. 18A through 18D are plan views of screens for setting the height information.

When it is determined to execute the second height information setting process in the step S105, the display controller 133 displays the screen 301 for setting the height information on the display 108 so that the specified image data is displayed on the regions 320 and 330 in the screen 301 (step S111).

When the reception unit 132 receives a partial-region specifying operation that specifies a partial region in a displayed image data (YES in step S1113), the display controller 133 displays the specified partial region in the region 330 (step S115). when the reception unit 132 does not receive the partial-region specifying operation (NO in step S113), the process of the step S115 is not executed.

The reception unit 132 waits until a reception of an operation to specify an arbitrary point in a region where the user wants to add height information or an operation to specify a color range on three-dimensional color space based on a specified arbitrary point on the image data displayed on the region 330 (NO in step S117). The operation to specify a color range on three-dimensional color space is simply referred to as "color-range specifying operation".

When the reception unit 132 receives the color-range specifying operation (YES in step S117), the image processor 134 selects a region having a color included in the specified color range on the image data of the three-dimensional image (step S119).

Then, the image processor 134 generates a gradation-conversion image data by converting a gradation of an image data such that a gradation value of a region selected in the step S119 becomes high (step S121). For example, the image processor 134 performs a grey scale image conversion on the image data of the three-dimensional image so that the gradation value of the color included in the selected region becomes high and the gradation value of the color not included in the selected region becomes low. Here, a detailed description of the gray scale image conversion that increases the gradation value of the specific color is omitted because it is known art.

Next, the display controller 133 displays in the region 360 of the screen 301 the gradation-conversion image data corresponding to the image data displayed in the region 320. Further, the display controller 133 displays in the region 370 of the screen 301 the gradation-conversion image data corresponding to the image data displayed in the region 330 (step S123).

Next, the reception unit 132 waits until a reception of the height information setting operation to set the height information to the region selected in the step S119 (NO in step S125).

When the reception unit 132 receives the height information setting operation (YES in step S1125), the image processor 134 sets the height information to the region selected in the step S119 with the method specified in the height information setting operation (step S127).

Next, when the setting of the height information continues (YES in step S129), the work flow goes back to step S113. When the setting of the height information ends (NO in step S129), the image processor 134 integrates the height information set for plurality of partial regions as the height information of the image data of the three-dimensional image if there are plurality of the partial regions to which the height information is set. The process of fabrication of the three-dimensional image after setting the height information is similar to the above-described embodiment, thus the explanation of which is omitted.

Examples of the processes are described above in which the characteristic of the image is an illustration having a clear shape or information that indicates whether an outline of a subject is clear. The characteristic of the image is not limited to the example described above, and the characteristic of the image may be arbitrarily set. The above description describes an example of process that receives the characteristic from the user. However, the reception unit 132 may receive the input of an output characteristic using a result of an image analysis performed by any information processing apparatus. For example, if the computer 10 has a known function of specifying a characteristic from an image data, the reception unit 132 may receive an input of characteristic specified by this function.

### Program

The program executed by the computer 10 and the three-dimensional fabrication apparatus 50 of the above-described embodiments and variations is provided to the user by being recorded on computer-readable recording media such as a compact disc read only memory (CD-ROM), a compact disc-recordable (CD-R), a memory card, a digital versatile disc (DVD), a flexible disk (FD), in the file form installable into or executable by the computer 10 and the three-dimensional fabrication apparatus 50.

Further, the program executed by the computer 10 and the three-dimensional fabrication apparatus 50 of the above-described embodiments and variations may be provided by being stored on a computer 10 connected to a network such as an internet. The program may be provided to the user via the network so that the user may download the program via the network. The program executed by the computer 10 and the three-dimensional fabrication apparatus 50 of the above-described embodiments and variations may be provided or distributed via network such as Internet. Further, a program executed by the computer 10 and the three-dimensional fabrication apparatus 50 of the above-described embodiments and variations may be provided by previously built-in a read only memory (ROM), etc.

Further, a program executed by the computer 10 and the three-dimensional fabrication apparatus 50 of the above-described embodiments and variations has a modular architecture to realize each of the above-described parts on the computer 10. As a hardware to execute the program, the CPU read out the program from the ROM onto the RAM and executes to realize each of the above-described functional parts on the computer 10. Not only the CPU reads out the program and executes the program as described above, the program executed by the computer 10 and the three-dimensional fabrication apparatus 50 of the above-described embodiments and variations may also be executed by cooperating with a hardware circuit such as CPU and Field Programmable Gate Array (FPGA). Further, the program may be executed only on the hardware circuit.

### Effects of embodiments

According to the setting method of the height information of the present embodiment, the display controller 133 of the computer 10 (example of information processing apparatus) displays a color image and a plurality of images obtained by separating color of a color image based on the image data of a color image (example of the process of display control). The reception unit 132 receives a setting of height information of each of plurality of images from the user (example of reception process). The image processor 134 (example of setting section and color separator) integrates height information set for each plurality of images and sets height information of the color image (an example of setting process). According to this method, it becomes easier to set the height information for the image having few color changes such as a pastel painting because the height information is set based on a plurality of color separated images. Further, in the present embodiment, the color image is color separated into the CMYK data. However, the color image may be converted to color space other than CMYK.

The display controller 133 displays a plurality of images obtained by separating the color image into process colors. Thereby, the computer 10 can perform color separation for all the colors that is reproducible by printing.

The reception unit 132 receives a setting of height information of the selected regions of each of plurality of images from the user. Thereby, the user can set the height information according to the characteristic of image for each regions.

When the reception unit 132 receives the setting of the height information for plurality of regions for each plurality of images, the image processor 134 integrates the height information set for plurality of regions as the height information of the color image. Thereby, the user can gradually set the height information while repeating the setting of height information for each image.

The reception unit 132 receives a setting of height information for a predetermined region that includes specified pixels. Thereby, the user can set the height information for each predetermined regions that includes the specified pixels.

The reception unit 132 receives a setting that sets a value corresponding to image gradation of the plurality of images as the height information of the each of the plurality of images. Thereby, the user can easily set the height information.

The reception unit 132 receives a setting of height information such that a constant value of the height information is set for the pixels having a gradation greater than a predetermined value of an image for each of plurality of images. Thereby, the user can collectively set the height information for each of the color separated images.

## Claims

1. An information processing apparatus (10) for generating height information for a received color image, the height information of the received color image being for controlling a three-dimensional fabrication apparatus to fabricate a three-dimensional object, comprising:
a color separator (134) to separate the received color image, based on image data of the color image, into a plurality of images with different respective coloration;
a display controller (133) to display the plurality of images;
a reception unit (132) to receive a setting of height information from a user for each of the plurality of images; and
a setting section (134) to merge the height information for each of the plurality of images, to obtain the height information for the color image.

2. An information processing apparatus (10) according to claim 1, wherein the display controller (133) displays the color image on a display (108).

3. An information processing apparatus (10) according to claim 1 or 2, wherein the display controller (133) displays the plurality of images obtained by separating the colors of the color image into process colors.

4. An information processing apparatus (10) according to any one of claims 1 to 3, wherein the reception unit (132) receives the setting of the height information for regions selected for each of the plurality of images.

5. An information processing apparatus (10) according to claim 4, wherein the setting section (134) integrates the height information set for the regions for each of the plurality of images and sets the height information of the color image when the reception unit (132) receives the setting of the height information for the regions for each of the plurality of images.

6. An information processing apparatus (10) according to claim 4 or 5, wherein the reception unit (132) receives the setting of the height information on a predetermined region that includes a specified pixel.

7. An information processing apparatus (10) according to any one of claims 1 to 6, wherein the reception unit (132) receives the setting that sets a value corresponding to gradation of each of the plurality of images as the height information of each of the plurality of images.

8. An information processing apparatus (10) according to any one of claims 1 to 6, wherein the reception unit (132) receives the setting of the height information for each of the plurality of images that sets a constant value of the height information for a pixel having gradation greater than a predetermined value.

9. An information processing apparatus (10) according to any one of claims 1 to 8, wherein the reception unit (132) is operative both to receive a selection whether to receive the setting of the height information for each of the plurality of images, on which color separation is performed, and to receive the setting of the height information for the color image, on which color separation is not performed.

10. A three-dimensional fabrication system, comprising:
the information processing apparatus according to any one of claims 1 to 9; and
a fabrication device (50) to fabricate a three-dimensional object based on the height information and the image data of the color image.

11. A method for generating height information for a received color image, the height information of the received color image being for controlling a three-dimensional fabrication apparatus to fabricate a three-dimensional object, comprising:
separating the received color image, based on image data of the color image, into a plurality of images with different respective coloration;
displaying the plurality of images;
receiving a setting of height information from a user for each of the plurality of images; and
merging the height information for each of the plurality of images, to obtain the height information for the color image.

12. A computer program for causing an information processing apparatus, for generating height information for a received color image, the height information of the received color image being for controlling a three-dimensional fabrication apparatus to fabricate a three-dimensional object, to execute:
separating the received color image, based on image data of the color image, into a plurality of images with different respective coloration;
displaying the plurality of images;
receiving a setting of height information from a user for each of the plurality of images; and
merging the height information for each of the plurality of images, to obtain the height information for the color image.

## Patentansprüche

1. Informationsverarbeitungsvorrichtung (10) zum Erzeugen von Höheninformationen für ein empfangenes Farbbild, wobei die Höheninformationen des empfangenen Farbbilds zum Steuern einer dreidimensionalen Fertigungsvorrichtung bereitgestellt sind, um ein dreidimensionales Objekt zu fertigen, umfassend:
einen Farbseparator (134) zum Unterteilen des empfangenen Farbbilds, basierend auf Bilddaten des Farbbilds, in eine Mehrzahl von Bildern mit einer entsprechenden unterschiedlichen Färbung;
eine Anzeigesteuerung (133) zum Anzeigen der Mehrzahl von Bildern;
eine Empfangseinheit (132) zum Empfangen einer Einstellung der Höheninformationen von einem Benutzer für jedes der Mehrzahl von Bildern; und
einen Einstellungsabschnitt (134) zum Zusammenführen der Höheninformationen für jedes der Mehrzahl von Bildern, um die Höheninformationen für das Farbbild zu erhalten.

2. Informationsverarbeitungsvorrichtung (10) nach Anspruch 1, wobei die Anzeigesteuerung (133) das Farbbild auf einer Anzeige (108) anzeigt.

3. Informationsverarbeitungsvorrichtung (10) nach Anspruch 1 oder 2, wobei die Anzeigesteuerung (133) die Mehrzahl von Bildern anzeigt, welche durch Unterteilen der Farben des Farbbilds in Prozessfarben erhalten wurden.

4. Informationsverarbeitungsvorrichtung (10) nach einem der Ansprüche 1 bis 3, wobei die Empfangseinheit (132) die Einstellung der Höheninformationen für Bereiche empfängt, welche für jedes der Mehrzahl von Bildern ausgewählt wurden.

5. Informationsverarbeitungsvorrichtung (10) nach Anspruch 4, wobei der Einstellungsabschnitt (134) die Höheninformationen integriert, welche für die Bereiche für jedes der Mehrzahl von Bildern eingestellt wurden und die Höheninformationen des Farbbilds einstellt, wenn die Empfangseinheit (132) die Einstellung der Höheninformationen für die Bereiche für jedes der Mehrzahl von Bildern empfängt.

6. Informationsverarbeitungsvorrichtung (10) nach Anspruch 4 oder 5, wobei die Empfangseinheit (132) die Einstellung der Höheninformationen über einen vorbestimmten Bereich empfängt, welcher ein bestimmtes Pixel umfasst.

7. Informationsverarbeitungsvorrichtung (10) nach einem der Ansprüche 1 bis 6, wobei die Empfangseinheit (132) die Einstellung empfängt, welche einen Wert einstellt, welcher der Gradation jedes der Mehrzahl von Bildern als die Höheninformationen jedes der Mehrzahl von Bildern entspricht.

8. Informationsverarbeitungsvorrichtung (10) nach einem der Ansprüche 1 bis 6, wobei die Empfangseinheit (132) die Einstellung der Höheninformationen für jedes der Mehrzahl von Bildern empfängt, welche einen konstanten Wert der Höheninformationen für ein Pixel einstellt, welches eine Gradation aufweist, die größer als ein vorbestimmter Wert ist.

9. Informationsverarbeitungsvorrichtung (10) nach einem der Ansprüche 1 bis 8, wobei die Empfangseinheit (132) betreibbar ist, um eine Auswahl zu empfangen, ob die Einstellung der Höheninformationen für jedes der Mehrzahl von Bildern zu empfangen ist, auf welchem die Farbunterteilung ausgeführt wird, und um die Einstellung der Höheninformationen für das Farbbild zu empfangen, auf welches die Farbunterteilung nicht ausgeführt wird.

10. Dreidimensionales Fertigungssystem, umfassend:
die Informationsverarbeitungsvorrichtung nach einem der Ansprüche 1 bis 9; und
eine Fertigungsvorrichtung (50) zum Fertigen eines dreidimensionalen Objekts basierend auf den Höheninformationen und den Bilddaten des Farbbilds.

11. Verfahren zum Erzeugen von Höheninformationen für ein empfangenes Farbbild, wobei die Höheninformationen des empfangenen Farbbilds zum Steuern einer dreidimensionalen Fertigungsvorrichtung bereitgestellt sind, um ein dreidimensionales Objekt zu fertigen, wobei das Verfahren umfasst:
Unterteilen des empfangenen Farbbilds, basierend auf Bilddaten des Farbbilds, in eine Mehrzahl von Bildern, welche eine entsprechende unterschiedliche Färbung aufweisen;
Anzeigen der Mehrzahl von Bildern;
Empfangen einer Einstellung der Höheninformationen von einem Benutzer für jedes der Mehrzahl von Bildern; und
Zusammenführen der Höheninformationen für jedes der Mehrzahl von Bildern, um die Höheninformationen für das Farbbild zu erhalten.

12. Computerprogramm zum Veranlassen, dass eine Informationsverarbeitungsvorrichtung zum Erzeugen von Höheninformationen für ein empfangenes Farbbild, wobei die Höheninformationen des empfangenen Farbbilds zum Steuern einer dreidimensionalen Fertigungsvorrichtung bereitgestellt sind, um ein dreidimensionales Objekt zu fertigen, Folgendes ausführt:
Unterteilen des empfangenen Farbbilds, basierend auf Bilddaten des Farbbilds, in eine Mehrzahl von Bildern mit einer entsprechenden unterschiedlichen Färbung;
Anzeigen der Mehrzahl von Bildern;
Empfangen einer Einstellung der Höheninformationen von einem Benutzer für jedes der Mehrzahl von Bildern; und
Zusammenführen der Höheninformationen für jedes der Mehrzahl von Bildern, um die Höheninformationen für das Farbbild zu erhalten.

## Revendications

1. Appareil de traitement d'informations (10) pour générer des informations de hauteur pour une image en couleur reçue, les informations de hauteur de l'image en couleur reçue étant destinées à commander un appareil de fabrication en trois dimensions pour fabriquer un objet en trois dimensions, comprenant :
un séparateur de couleur (134) pour séparer l'image en couleur reçue, sur la base des données d'image de l'image en couleur, en une pluralité d'images avec une coloration respective différente ;
un contrôleur d'affichage (133) pour afficher la pluralité d'images ;
une unité de réception (132) pour recevoir un paramètre des informations de hauteur d'un utilisateur pour chacune de la pluralité d'images ; et
une section de paramétrage (134) pour fusionner les informations de hauteur pour chacune de la pluralité d'images, pour obtenir les informations de hauteur pour l'image en couleur.

2. Appareil de traitement d'informations (10) selon la revendication 1, dans lequel le contrôleur d'affichage (133) affiche l'image en couleur sur un écran (108).

3. Appareil de traitement d'informations (10) selon la revendication 1 ou 2, dans lequel le contrôleur d'affichage (133) affiche la pluralité d'images obtenues en séparant les couleurs de l'image en couleur en couleurs de traitement.

4. Appareil de traitement d'informations (10) selon l'une quelconque des revendications 1 à 3, dans lequel l'unité de réception (132) reçoit le paramètre des informations de hauteur pour des régions sélectionnées pour chacune de la pluralité d'images.

5. Appareil de traitement d'informations (10) selon la revendication 4, dans lequel la section de paramétrage (134) intègre les informations de hauteur établies pour les régions pour chacune de la pluralité d'images et établit les informations de hauteur de l'image en couleur lorsque l'unité de réception (132) reçoit le réglage des informations de hauteur pour les régions pour chacune de la pluralité d'images.

6. Appareil de traitement d'informations (10) selon la revendication 4 ou 5, dans lequel l'unité de réception (132) reçoit le paramètre des informations de hauteur sur une région prédéterminée qui inclut un pixel spécifié.

7. Appareil de traitement d'informations (10) selon l'une quelconque des revendications 1 à 6, dans lequel l'unité de réception (132) reçoit le paramètre qui établit une valeur correspondant à la gradation de chacune de la pluralité d'images comme informations de hauteur de chacune de la pluralité d'images.

8. Appareil de traitement d'informations (10) selon l'une quelconque des revendications 1 à 6, dans lequel l'unité de réception (132) reçoit le réglage des informations de hauteur pour chacune de la pluralité d'images qui établit une valeur constante des informations de hauteur pour un pixel présentant une gradation supérieure à une valeur prédéterminée.

9. Appareil de traitement d'informations (10) selon l'une quelconque des revendications 1 à 8, dans lequel l'unité de réception (132) est opérationnelle à la fois pour recevoir une sélection s'il convient de recevoir le paramètre des informations de hauteur pour chacune de la pluralité d'images, sur laquelle la séparation de couleur est réalisée, et pour recevoir le paramètre des informations de hauteur pour l'image en couleur, sur laquelle la séparation de couleur n'est pas effectuée.

10. Système de fabrication en trois dimensions, comprenant :
l'appareil de traitement d'informations selon l'une quelconque des revendications 1 à 9 ; et
un dispositif de fabrication (50) pour fabriquer un objet en trois dimensions sur la base des informations de hauteur et des données d'image de l'image en couleur.

11. Procédé de génération d'informations de hauteur pour une image en couleur reçue, les informations de hauteur de l'image en couleur reçue étant destinées à commander un appareil de fabrication en trois dimensions pour fabriquer un objet en trois dimensions, comprenant :
la séparation de l'image en couleur reçue, sur la base de données d'image de l'image en couleur, en une pluralité d'images avec une coloration respective différente ;
l'affichage de la pluralité d'images ;
la réception d'un paramètre des informations de hauteur d'un utilisateur pour chacune de la pluralité d'images ; et
la fusion des informations de hauteur pour chacune de la pluralité d'images, pour obtenir les informations de hauteur pour l'image en couleur.

12. Programme informatique pour amener un appareil de traitement d'informations, pour générer des informations de hauteur pour une image en couleur reçue, les informations de hauteur de l'image en couleur reçue étant destinées à commander un appareil de fabrication en trois dimensions pour fabriquer un objet en trois dimensions, à exécuter :
la séparation de l'image en couleur reçue, sur la base de données d'image de l'image en couleur, en une pluralité d'images avec une coloration respective différente ;
l'affichage de la pluralité d'images ;
la réception d'un paramètre des informations de hauteur d'un utilisateur pour chacune de la pluralité d'images ; et
la fusion des informations de hauteur pour chacune de la pluralité d'images, pour obtenir les informations de hauteur pour l'image en couleur.
